(19) Europäisches Patentamt
European Patent Office
Office européen des brevets

(11) **EP 4 520 512 A1**

(12) **EUROPEAN PATENT APPLICATION**

(43) Date of publication:
**12.03.2025 Bulletin 2025/11**

(21) Application number: **23195460.3**

(22) Date of filing: **05.09.2023**

(51) International Patent Classification (IPC):
**B29C 70/14** (2006.01)　　　**B29C 70/20** (2006.01)

(52) Cooperative Patent Classification (CPC):
**B29C 70/545; B29B 11/16; B29C 70/14;
B29C 70/20; B29C 70/30; B29C 70/50;
B29C 70/504; B32B 3/12; B32B 3/266;**
B29C 2793/0036; B29C 2793/0081

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Composites Busch
2900 Porrentruy (CH)**

(72) Inventors:
• **AUBRY, Jérôme
  CH-2900 Porrentruy (CH)**
• **MUDERRIS, Ahmet
  CH-2900 Porrentruy (CH)**
• **DANGER, Xavier
  CH-2900 Porrentruy (CH)**
• **PORTE, Alain
  CH-2900 Porrentruy (CH)**

(74) Representative: **Connor, Marco Tom et al
Pecher & Partners
Rue Louis de Geer, 6
1348 Louvain-la-Neuve (BE)**

(54) **INCISED PLIES COMPRISING CURVED INCISIONS**

(57)　　The invention relates to incised composite plies (10) comprising long fibres aligned unidirectionally along a Y-axis and combined with a polymer binder. The incised composite ply comprises incisions (1) cutting through the ply-thickness. The incisions are distributed over a surface of the incised composite ply according to a repetitive pattern wherein the incisions are evenly distributed at regular intervals along the Y-axis and X-axis of the ply (X $\perp$ Y). The incisions are curved and have a convex side oriented along the Y-axis and have a radius of curvature , R1 $\geq$ 0.1 mm. The curved incisions have a geometry inscribed in corresponding rectangles, of incision length (x1) and incision height (y1) measured along the X-axis and the Y-axis, respectively, and an aspect ratio, $1 \leq x1 / y1 \leq 12$. The curved incisions facilitate the formation thereof, reducing noise and tool wear, whilst allowing the production rate to be increased.

FIG.1(a)

EP 4 520 512 A1

**Description**

**FIELD OF THE INVENTION**

The invention relates to the field of high-performance composite parts. More particularly, the invention relates to a semi-finished composite product in the form of incised composite plies, with unidirectional fibres coupled with a polymeric matrix and cut at intervals by incisions to form segments of long fibres. The geometry of the incisions offers all the advantages of incised plies of the art, with additional advantages. In particular, it was observed that the service life of the cutting tools used for forming the incisions surprisingly increased with the present invention, allowing a substantially higher repeatability of the incisions' quality over large volumes of production. Furthermore, during cutting of the incisions the plies could be delivered to the cutting tool at a higher rate than with straight incisions and the noise generated during cutting of the incisions was substantially reduced.

**BACKGROUND OF THE INVENTION**

Composite materials are increasingly present in sectors of advanced technologies, including, for example, aeronautics, space, medical, automotive and mobility in general, because these materials can be used to make parts with equivalent performance to conventional metal parts, but with lower mass. Composite materials are a combination of reinforcing fibres, such as carbon, glass, aramid, or vegetal fibres, embedded in a polymeric matrix. In some applications, the orthotropic properties of unidirectional fibre reinforced composites can also be taken advantage of to design structural parts of yet lower weight compared with the isotropic properties of metal. In other applications, quasi-isotropic properties can be achieved by stacking unidirectional plies in different directions, such as (+45 / 90 / -45 / 0), to yield mechanical properties comparable with isotropic metal parts.

A distinction is made between advanced composites and engineering composites. Advanced composites comprise long or continuous fibres, aligned along controlled patterns, and cannot be processed by injection moulding. By contrast, engineering composites comprise randomly oriented shorter fibres (generally not more than about 5 mm long) and are generally processed by injection moulding. The present invention concerns advanced composites.

This optimisation of weight enables e.g., aircraft manufacturers to lighten aircraft structures and therefore reduce the power and size of the engines of the aircraft, which consume less fuel. This leads to a virtuous cycle, as less weight must be transported by the aircraft structure, allowing a further reduction of the size and weight of the structure, and so on. All these advantages combine to reducing the carbon footprint of air-travelling. New aircraft incorporate composite materials over more than 50% of their weight and 80% of their volume. Similarly, the frequency a part can be moved at is limited by inertia which depends *inter alia* on the weight of the part. Reducing the weight of a part moving at high frequency therefore allows increasing the maximum frequency it can be operated at.

Continuous fibre reinforced composites have excellent mechanical properties in the direction of the fibres. Because of the inability of continuous fibres to move in the direction of the fibre length, however, the preforms used for producing parts have poor drapeability, substantially limiting the complexity of the geometries of the parts which can be produced with continuous fibres composite preforms. To date, composite parts of complex geometries are generally produced using sheet moulding compound (SMC). SMC is a ready to mould fibre reinforced thermoset preform in the form of sheets that can be stacked and further processed by compression moulding. Fibres of length generally longer than about 25 mm are randomly dispersed in a thermoset resin. The fibres are not necessarily straight. The random distribution of the fibre lengths and orientation limits the maximum contents of reinforcing fibres and reduces both mechanical performance and reproducibility, imposing severe safety margins upon dimensioning a structural part. SMC material is described, e.g., in US6838148.

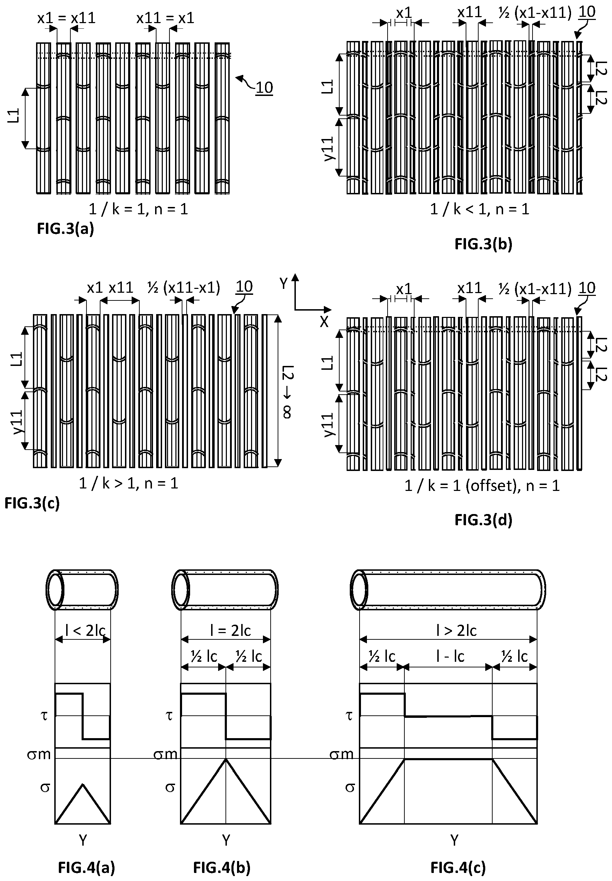

US2010/0233423 describes an incised composite ply made of unidirectional, long discontinuous fibres to improve drapeability of the ply and thus allowing parts of more complex geometries to be produced. The plies are formed from prepregs of unidirectional continuous fibres that are incised in a direction transverse to the fibre direction, to form an incised ply. The incisions are such that the continuous fibres become discontinuous of length comprised between 5 and 100 mm. A higher deformation in the fibre direction is thus obtained improving 3D-drapeability, but at the expenses of a corresponding loss of mechanical properties which depends on the fibre length. Depending on the critical length (lc) of the specific fibre / matrix system used, the losses in mechanical properties are limited with using a fibre length (l) such that [(l - lc) / l] is sufficiently high (cf. Figures 4(a) to 4(c) for a graphical representation of the fibre length (l) and critical length (lc), discussed in more detail later). The incisions are generally formed by passing a continuous fibre composite ply through rollers provided with protruding blades in the shape of the incisions that cut incisions in the ply as it passes through them.

Incised composite plies with incisions of different geometries and distributed randomly or according to different patterns are described in the art such as US 2021/0114342, US20190077048, EP2127840, JP2008260793, JP2010018723, EP4129601, WO2021192464, JP2015051629, WO 2022/179956. These incised composite plies, however, generally have one or more of the following drawbacks,

- The distribution of the incisions over the ply surface does not afford a sufficient reproducibility of the properties of parts produced from different areas of the incised composite plies, and / or

- The service life of the blades used for forming the incisions is limited as they wear rapidly upon cutting through the fibres, which causes a poor reproducibility of the incisions' quality as the blades of the cutting tool become blunt, and

- the cutting of the incisions generates substantial vibrations and noise because of repeated impacts of the blades against the ply.

The present invention proposes an incised composite ply combining high drapeability and mechanical properties, which are as reproducible as continuous fibre prepregs, and allow for an easier production, with less noise and longer service time of the incision equipment. These and other advantages of the present invention are described in more details in the following sections.

## SUMMARY OF THE INVENTION

The present invention concerns an incised composite ply having first and second main surfaces separated from one another by a ply-thickness measured along a Z-axis, and having a ply length measured along a Y-axis and a ply width measured along an X-axis, with $X \perp Y \perp Z$, and comprising long fibres aligned unidirectionally along the Y-axis and combined with a polymer binder.

The incised composite ply comprises incisions extending from a first end to a second end and cutting the incised composite ply through a whole or a portion of the ply-thickness. Preferably, the incisions cut through the whole of the ply thickness. The incisions are aligned and evenly distributed along the X-axis and are aligned and evenly distributed along the Y-axis, such that,

- a first weight fraction (f1) of the long fibres has a first length (L1) measured along the Y-axis which is constant, wherein the first weight fraction (f1) is from 75% to 100% (i.e., $75\% \leq f1 \leq 100\%$), and

- a second weight fraction (f2) of the long fibres complementary of the first weight fraction (f1) (i.e., f2 = 1 - f1) has a mean second length (L2a) and a mean third length (L2b) measured along the Y-axis which are constant and different from the first length (L1) and are either,

  ○ different from one another (i.e., L2a and L2b ≠ L1, L2a ≠ L2b) wherein lengths of the long fibres of the second weight fraction (f2) of mean second length (L2a) vary within $\pm 2\delta$ from the mean second length (L2a), and wherein lengths of the long fibres of the second weight fraction (f2) of mean third length (L2b) vary within $\pm 2\delta$ from the mean third length (L2b), with $\delta \leq \frac{1}{2} y1$, or
  ○ equal to one another (i.e., L2a and L2b ≠ L1, L2a = L2b), wherein lengths of the long fibres of the second weight fraction (f2) of mean second length (L2a) vary within $\pm 2\delta$ from the mean second length (L2a),

The gist of the present invention is that at least 50%, preferably 100% of the incisions (1),

- are curved and comprise one or more portions having a convex side oriented along the Y-axis and having a radius of curvature (R1) is larger than a minimum radius of curvature (Rmin) of at least 0.1 mm (i.e., Rmin $\geq$ 0.1 mm), preferably at least 1 mm (i.e., Rmin $\geq$ 1 mm), and
- have a geometry inscribed in corresponding rectangles, which have an incision length (x1) measured along the X-axis and an incision height (y1) measured along the Y-axis, and an aspect ratio (x1 / y1) of the incision length (x1) to the incision height (y1) of at least 1 (i.e., x1 / y1 $\geq$ 1), preferably at least 2 (i.e., x1 / y1 $\geq$ 2), and is preferably not more than 12 (i.e., x1 / y1 $\leq$ 12), more preferably not more than 8 (i.e., x1 / y1 $\leq$ 8), most preferably not more than 6 (i.e., x1 / y1 $\leq$ 6).

The rectangles inscribing the incisions are preferably distributed according to a repetition of a pattern defining a unit cell paving the first and second main surfaces along both X-axis and Y-axis, wherein the unit cell has a length measured along the Y-axis equal to the first length (L1).

In an embodiment of the invention, the rectangles inscribing the incisions are aligned and evenly distributed in corresponding X-rows (Xr), wherein the X-rows extend over the ply width along the X-axis and are separated from one another by an X-row distance (yXr) measured along the Y-axis. In each X-row, the rectangles are separated from one another by an X-distance (x11) measured along the X-axis, which is equal to N times the incision length (x1), wherein N = n / k, with 1 / k = 1 - f2 or 1 / k = 1 + f2, and is comprised between 0.75 $\leq$ 1 / k $\leq$ 1.25, preferably 0.9 $\leq$ 1 / k $\leq$ 1.1, more preferably, 1 / k = 1 ± 0.05, and wherein $n \in \mathbb{N}$ and n ≥ 1 and preferably n ≥ 2, or n ≥ 3, or n ≥ 4.

In an alternative or in the same embodiment, the rectangles inscribing the incisions are aligned and evenly distributed in corresponding Y-columns (Yc), which extend over the ply length along the Y-axis and wherein in each Y-column, (Yc) the rectangles are separated from one another by a Y-incision distance (y11) measured along the Y-axis, which is equal to, y11 = (n + 1) yXr + n y1.

It is preferred that the rectangles inscribing the incisions are aligned and evenly distributed over a diagonal forming an angle ($\alpha$) with the Y-axis, wherein preferably, tan $\alpha$- = x1 / (y1 + yXr).

For example, the incisions and their distribution over the ply can be according to anyone of the following examples,

- 1 / k = 1 - f2 < 1 and L2a = L2b, with 0 < L2a < L1, or
- 1 / k = 1 - f2 < 1, and L2a ≠ L2b, with 0< L2a < L1 and 0 < L2b < L1, or
- 1 / k = 1 + f2 > 1, and L2a = L2b, with L2a →∞, or
- 1 / k = 1, then f2 = 0 and L2a = L2b = 0.

The first length (L1) can be equal to a product of (n + 1) to a unit length (Lm) (i.e., L1 = (n + 1) Lm) with Lm = (yXr + y1), wherein the unit length (Lm) is preferably comprised between 10 and 50 mm, and wherein the first length (L1) is preferably comprised between 40 and 100 mm, more preferably, between 50 and 80 mm.

The curved incisions (1) can have different geometries. For example, the curved incisions,

- can have a single curvature and preferably have a geometry of an arc of a circle, an arc of an ellipse, an arc of a parabola, or any single curvature arcuated segment, and wherein all the incisions (1) are preferably oriented with their convex side facing a same direction along the Y-axis, or
- can comprise two curved portions having their respective convex sides oriented in opposite directions along the Y-axis, forming an "S"-shape, or
- can comprise two or more segments of radius of curvature larger than the maximum radius of curvature (Rmax) joined to one another by corresponding one or more of the curved portions.

In a preferred embodiment, the incisions have a same geometry of an arc of circle of radius (R1) comprised between 1 and 10 mm, preferable between 2 and 5 mm, and is more preferably equal to 3.4 ± 0.4 mm and having a radius ratio (R1 / x1) of the radius (R1) to the incision length (x1) comprised between 0.4 and 1.0, preferably between 0.5 and 0.7.

In an embodiment, the incised composite ply can have a width (W) measured along the X-axis, and a length ratio (x1 / W) of the incision length (x1) to the incised composite ply width (W) is equal to at least 5 (i.e., x1 / W ≥ 5), preferably to at least 10 (i.e., x1 / W ≥ 10), more preferably at least 20 (i.e., x1 / W ≥ 20), and / or

In an embodiment, the length ratio (x1 / W) can be not more than 30, preferably not more than 25, more preferably not more than 20

In an embodiments,

- 3 ≤ x1 ≤ 25 mm, preferably 5 ≤ x1 ≤ 15 mm, and / or

- 0.25 ≤ y1 ≤ 25 mm, preferably 1.5 ≤ y1 ≤ 10 mm, and / or

- 2.25 ≤ x11 ≤ 25 mm, preferably 5 ≤ x1 ≤ 15 mm, and / or

- 20 ≤ y11≤ 100 mm, preferably, 50 ≤ y11≤ 75 mm.

The present invention also concerns a multiply composite preform comprising two or more composite plies stacked on top of one another, wherein at least a first composite ply among the two or more composite plies is the incised composite ply defined supra.

The composite plies other than the first composite ply (10a) can be anyone of,

- the incised composite plies as defined supra and are identical to the first composite ply thus forming an incised multiply composite preform, or
- a not incised composite ply and are plies selected among,

  ∘ a ply of unidirectional long fibres with no incisions,
  ∘ a woven fabric of long fibres combined with a resin,

     ○ a woven fabric of long fibres mixed with a solid thermoplastic polymer,
     ○ a fabric comprising metal threads,
     ○ a conductive metal sheet, preferably made of aluminium or copper and preferably in the form of stripes.

The incised multiply composite preform can be formed by two identical incised composites plies stacked on top of one another with the fibres arranged with a same orientation, thus forming a UD-incised two-ply composite preform. The two incised composite plies are preferably offset by a Y-shift ($\Delta y$) over the Y-axis and / or by an X-shift ($\Delta x$) over the X-axis, such that the incisions of the two incised composite plies do not overlap with one another by more than 20% of the incision length ($x1$), and they preferably do not overlap at all. The Y-shift ($\Delta y$) can for example be equal to half the first length ($L1$) within 10% (i.e., $\Delta y = \frac{1}{2} L1 \pm 10\%$), and

- the X-shift ($\Delta x$) can be equal to 0 (i.e., $\Delta x = 0$), or
- the X-shift ($\Delta x$) can be larger than 0 (i.e., $\Delta x > 0$) and is preferably equal to half the X-distance ($x11$) within 10% (i.e., $\Delta x = \frac{1}{2}x11 \pm 10\%$).

The present invention also concerns a process for producing an incised composite ply as defined supra, comprising,

- providing a composite ply comprising long fibres, preferably continuous fibres, aligned unidirectionally along the Y-axis and combined with a polymer binder,
- feeding the composite ply in the Y-direction to a cutting apparatus configured to cut incisions through a portion or a whole of the ply thickness, preferably through the whole of the ply thickness, to produce the incised composite ply,

wherein the cutting apparatus comprises an incising roller and a counter surface wherein the incising roller comprises cutting protrusions distributed over an outer surface thereof configured for cutting through a portion or a whole of the thickness of the ply the corresponding incisions as the ply is continuously fed and proceeds between the incising roller (30i) and the counter roller.

The present invention also concerns a process for producing the multiply composite preform as defined supra, comprising,

- providing a first composite ply,
- laminating the first composite ply with one or more composite plies,
- preferably at least punctually fixing the first incised composite ply and one or more other composite plies to one another,

wherein the first composite ply is an incised composite ply as discussed supra.

The present invention also concerns a process for producing a composite article comprising the following steps,

- providing a multiply composite preform as defined supra,
- cutting the multiply composite preform to form a sub-preform whose geometry is adapted to a geometry of the composite article,
- optionally, assembling different sub-preforms to form a final preform of the composite article,
- depositing the sub-preform or the final preform in a mould,
- applying pressure and heat to consolidate the sub-preform or final preform and thereby forming the composite article, and
- removing the composite article from the mould.

## SHORT DESCRIPTION OF THE DRAWINGS

These and further aspects of the invention will be explained in greater detail by way of example and with reference to the accompanying drawings in which:

**Figures 1(a) to (1f)** show different distribution patterns characterized by corresponding unit cells (11) (Y-axis defines the fibre direction).

**Figures 2(a) and 2(b)** show the various geometrical parameters characterizing the incisions and their distribution over the main surface of the composite ply.

**Figures 3(a) to 3(d)** show an exploded view of segments of fibres of first, mean second, and mean third lengths (L1, L2a, L2b), wherein,

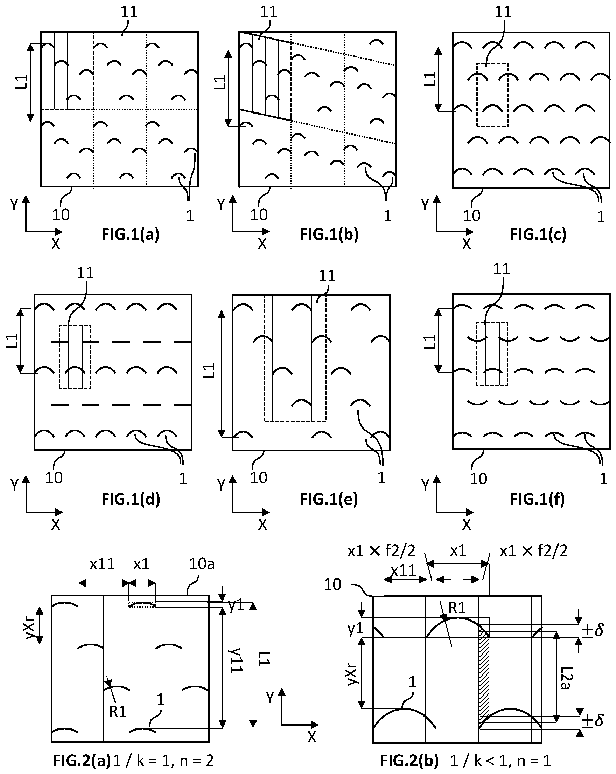

**Figure 3(a),** 1 / k = 1 so that all fibres have the first length (L1),

**Figure 3(b),** 1 / k < 1, so that every two adjacent Y-columns overlap,

**Figure 3(c),** 1 / k > 1, so that f2 of the fibres are uncut (i.e., continuous fibres), and

**Figure 3(d),** 1 / k < 1, with offset so that there are fibres of first length (L1), of mean second length L2a < L1 and continuous fibres of mean third length (L2b).

**Figures 4(a) to 4(c)** show fibres of different lengths (l) with corresponding stress transfer from the matrix to the fibre depending on the critical length (lc).

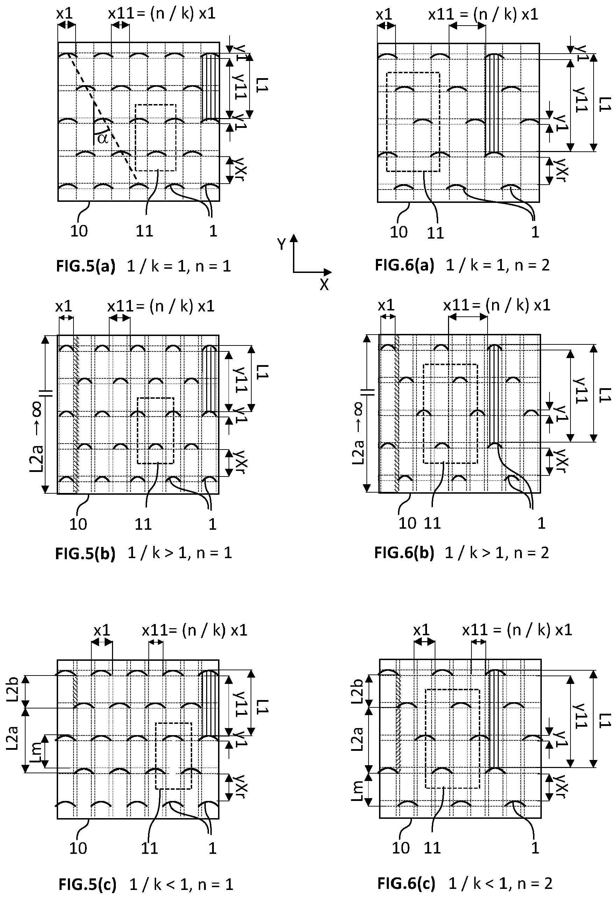

**Figures 5(a) to 5(c)** show incisions distribution patterns with n = 1 and (a) 1 / k = 1, (a) 1 / k = 1and (b) 1 / k > 1, and (c) 1 / k < 1, with corresponding unit cells.

**Figures 6(a) to 6(c)** show incisions distribution patterns with n = 2 and (a) 1 / k = 1, (b) 1 / k > 1, and (c) 1 / k < 1, with corresponding unit cells.

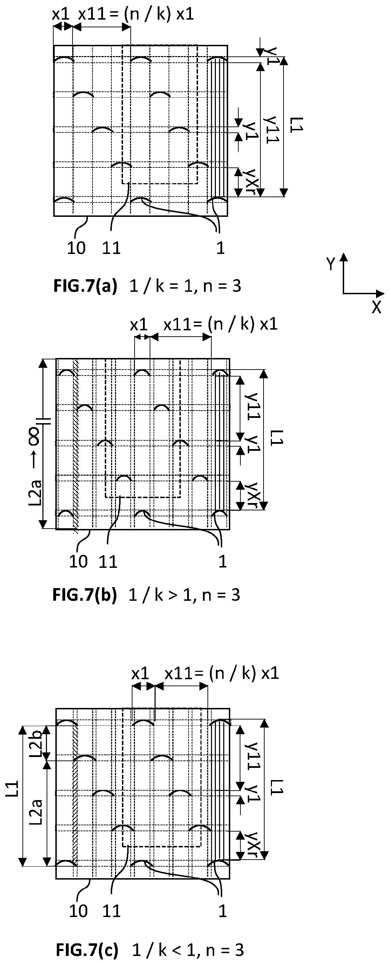

**Figures 7(a) to 7(c)** show incisions distribution patterns with n = 3 and (a) 1 / k = 1, (b) 1 / k > 1, and (c) 1 / k < 1, with corresponding unit cells.

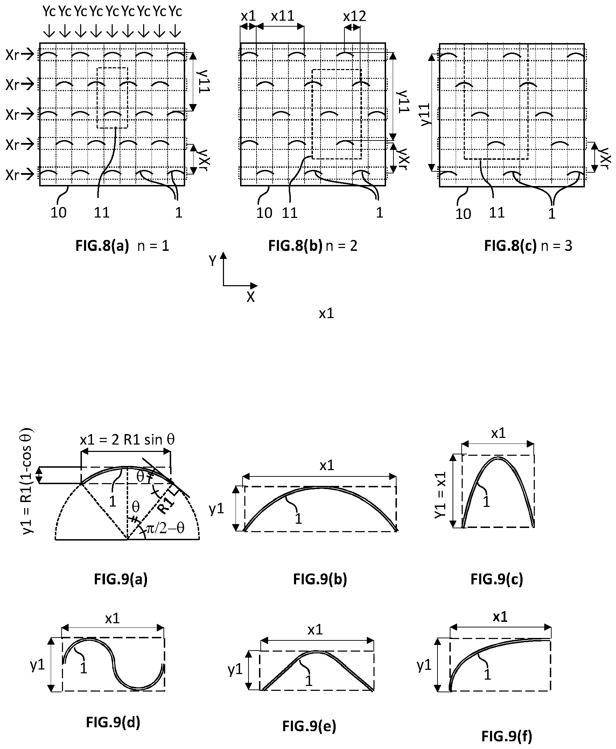

**Figures 8(a) to 8(c)** show fibres incisions distribution patterns with 1 / k = 1 and (a) n = 1, (b) n = 2, and (c) n = 3, with corresponding unit cells.

**Figures 9(a) to 9(f)** show different geometries of curved incisions.

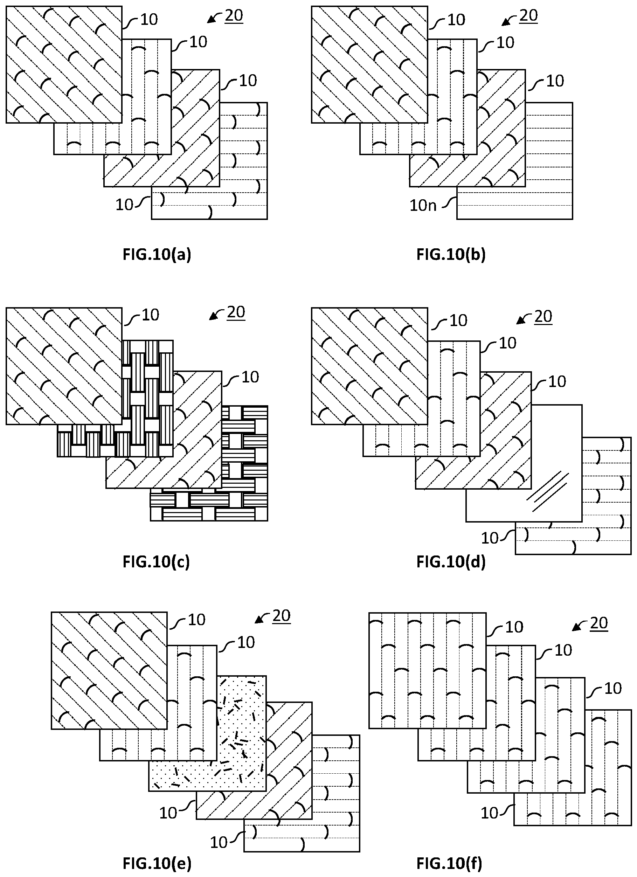

**Figure 10(a)** shows a stack of long fibres composite plies forming a quasi-isotropic multiply composite preform with 45 / 0 / -45 / 90 orientations, comprising four incised composite plies according to the present invention.

**Figure 10(b)** shows a stack of long fibres composite plies forming a quasi-isotropic multiply composite preform with 45 / 0 / -45 / 90 orientations, comprising a mix of incised composite plies according to the present invention and continuous fibre plies.

**Figure 10(c)** shows a stack of long fibres composite plies forming a quasi-isotropic multiply composite preform with 45 / 0 / -45 / 90 orientations, comprising two incised composite plies according to the present invention and two woven plies.

**Figure 10(d)** shows a stack of long fibres composite plies forming a quasi-isotropic multiply composite preform with 45 / 0 / -45 / 90 orientations, comprising four incised composite plies according to the present invention with an additional non-reinforced layer which can be a layer made of a polymer or a metal foil.

**Figure 10(e)** shows a stack of long fibres composite plies forming a quasi-isotropic multiply composite preform with 45 / 0 / SMC /-45 / 90 orientations, comprising four incised composite plies according to the present invention with an additional ply of randomly oriented fibres ply (e.g., SMC).

**Figure 10(f)** shows a stack of long fibres composite plies forming a UD-multiply incised composite preform.

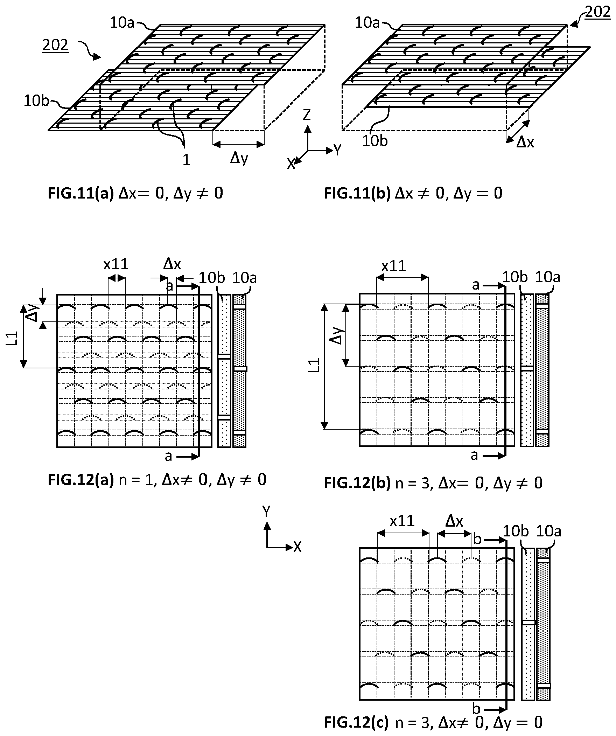

**Figures 11(a) & 11(b)** show two embodiments of UD-incised two-ply composite preforms formed by stacking two incised composite plies on top of one another with same fibre orientation, (a) with an offset shift (a) Y-shift (△y) over the Y-axis, and (b) X-shift (△x) over the X-axis.

**Figures 12(a) to 12(c)** show the superpositions of the incisions of the two incised composite plies forming UD-incised two-ply composite preforms, (a) n = 1, with both Y-shift (△y) and X-shift (△x), (b) n = 3, with a Y-shift (△y) only, and (c) n = 3, with a X-shift (△x) only.

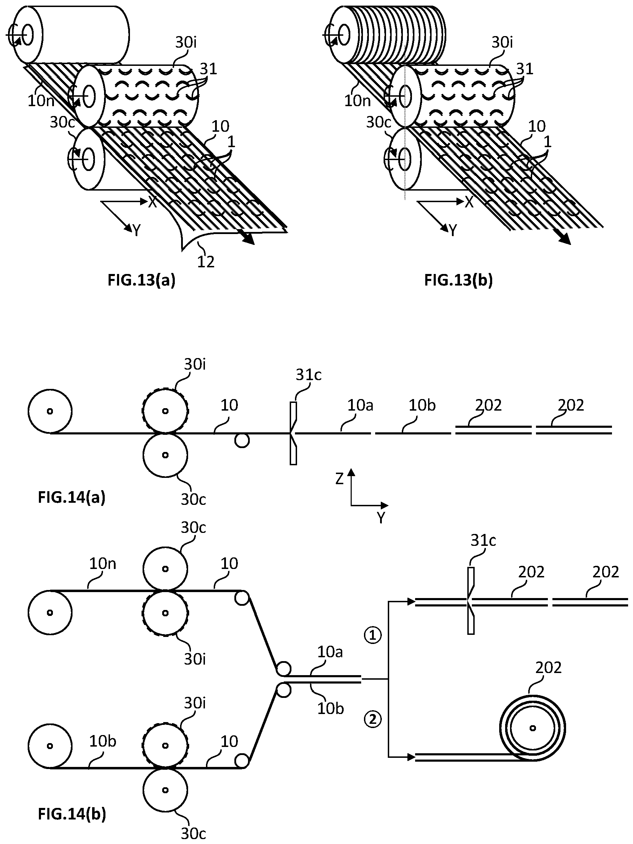

**Figures 13(a) & 13(b)** show two embodiments of a process for forming incisions on a continuous fibre preform, (a) with a release layer, and (b) without a release layer.

**Figures 14(a) & 14(b)** show two embodiments of a process for forming UD-incised two-ply composite preforms.

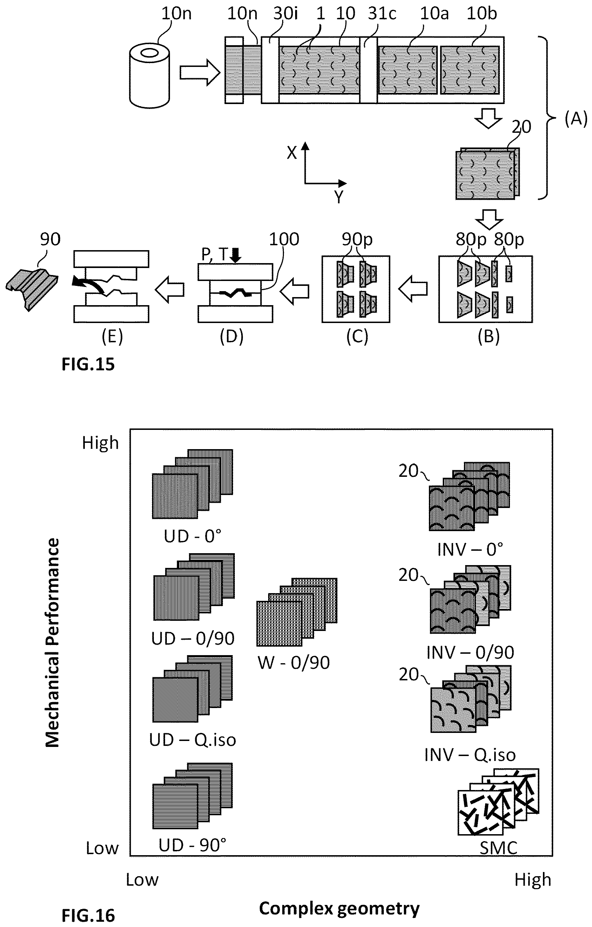

**Figure 15** shows process steps for producing a composite article with incised composite plies according to the present invention.

**Figure 16** positions various types of composite preforms in a graph of mechanical performance as a function of possible geometry complexity (or drapeability).

## DETAILED DESCRIPTION OF THE INVENTION

As illustrated in Figures 1(a) to 1(f), the incised composite ply (10) of the present invention has first and second main surfaces separated from one another by a ply-thickness measured along a Z-axis, and has a ply length measured along a Y-axis and a ply width measured along an X-axis, with $X \perp Z$ and $Y \perp Z$. The composite ply comprises long fibres aligned unidirectionally along the Y-axis and combined with a polymer binder.

The incised composite ply comprises incisions (1) extending from a first end to a second end and cutting the incised composite ply through a whole or a portion of the ply-thickness, preferably through at least 50% of the ply thickness, more preferably through at least 80%, most preferably through 100% of the ply thickness. The incisions (1) are aligned and evenly distributed along the X-axis and are aligned and evenly distributed along the Y-axis. The incisions cut through a portion or all of the fibres, forming weight fractions of long fibres of various lengths. A first weight fraction (f1) of the long fibres has a first length (L1) measured along the Y-axis which is constant, wherein the first weight fraction (f1) is from 75% to 100% (i.e., $75\% \leq f1 \leq 100\%$). A second weight fraction (f2) of the long fibres complementary of the first weight fraction (f1) (i.e., $f2 = 1 - f1$) has a mean second length (L2a) and a mean third length (L2b) measured along the Y-axis which are constant and different from the first length (L1). The mean second length (L2a) and mean third lengths (L2b) and are either equal to one another (i.e., L2a and $L2b \neq L1$, L2a = L2b), or different from one another (i.e., L2a and $L2b \neq L1$, $L2a \neq L2b$) wherein lengths of the long fibres of the second weight fraction (f2) of mean second length (L2a) vary within $\pm 2\delta$ from the mean second length (L2a), and wherein lengths of the long fibres of the second weight fraction (f2) of mean third length (L2b) vary within $\pm 2\delta$ from the mean third length (L2b), with $\delta \leq \frac{1}{2}$ y1, wherein y1 is defined below.

The gist of the present invention is that, at least 50%, preferably 100% of the incisions (1) are curved and comprise one or more portions having a convex side oriented along the Y-axis and having a radius of curvature (R1) larger than a minimum radius of curvature (Rmin) of at least 0.1 mm (i.e., $Rmin \geq 0.1$ mm), preferably at least 1 mm (i.e., $Rmin \geq 1$ mm). The incisions (1) have a geometry inscribed in corresponding rectangles, which have an incision length (x1) measured along the X-axis and an incision height (y1) measured along the Y-axis, and an aspect ratio (x1 / y1) of the incision length (x1) to the incision height (y1) of at least 1 (i.e., $x1 / y1 \geq 1$), preferably at least 2 (i.e., $x1 / y1 \geq 2$), and is preferably not more than 12 (i.e., $x1 / y1 \leq 12$), more preferably not more than 8 (i.e., $x1 / y1 \leq 8$), most preferably not more than 6 (i.e., $x1 / y1 \leq 6$).

The rectangles inscribing the incisions (1) are preferably distributed according to a repetition of a pattern defining a unit cell (11). The unit cell is repeated, thus paving the first and second main surfaces along both X-axis and Y-axis. The unit cell (11) has a length measured along the Y-axis equal to the first length (L1).

## INCISIONS (1)

At least 50%, preferably at least 80%, more preferably $95\% \pm 4\%$, most preferably 100% of the incisions (1) are curved. Figures 9(a) to 9(f) give some examples of geometries of incisions according to the present invention. They have a geometry inscribed in rectangles (cf. dashed rectangles in Figures 9(a) to 9(f), having an incision length (x1) measured along the X-axis and an incision height (y1) measured along the Y-axis (i.e., the fibre direction). The aspect ratio (x1 / y1) of the incision length (x1) to the incision height (y1) is at least 1 (i.e., $x1 / y1 \geq 1$). Figure 9(c) shows an incision inscribed in a rectangle of aspect ratio x1 / y1 = 1. It is preferred, however, that the incision length (x1) be larger than the incision height (y1) (i.e., x > y1) with an aspect ratio of preferably at least 2 (i.e., $x1 / y1 \geq 2$). Increasing the aspect ratio x1 / y1 tends asymptotically towards a straight incision, which is not desired in the present invention. The aspect ratio x1 / y& should therefore not exceed 12 (i.e., $x1 / y1 \leq 12$), preferably not exceed 8 (i.e., $x1 / y1 \leq 8$), most preferably not more than 6 (i.e., $x1 / y1 \leq 6$) or even 4 (i.e., $x1 / y1 \leq 4$).

The incisions preferably have a single curvature as illustrated in Figures 9(a) to 9(c), 9(e), and 9(f). A single curvature geometry is defined herein as a geometry having a single a convex side oriented along the Y-axis. For example, the incisions can have a geometry of an arc of a circle (cf. Figure 9(a)), an arc of an ellipse (cf. Figure 9(c)), an arc of a parabola, or any single curvature arcuated segment. As shown in Figure 9(e) the incision can also comprise two or more segments of radius of curvature larger than the maximum radius of curvature (Rmax) including straight segments, joined to one another by corresponding one or more of the curved portions. All the single curvature incisions (1) are preferably oriented with their convex side facing a same direction along the Y-axis, as shown e.g., in Figure 1(a), or can be facing different directions along the Y-axis according to a pattern, as shown e.g., in Figure 1(f). In some embodiments, however, the incisions can have a double curvature, with two curved portions having their respective convex sides oriented in opposite directions along the Y-axis, forming an "S"-shape. An example of double curvature incisions is illustrated in Figure 9(d).

The chord connecting the two ends of the curved incisions (1) is preferably parallel to the X-axis, as shown in Figures 9(a) to 9(e). It can also be transverse to the X-axis, as shown in Figure 9(f).

The convex side of the incisions must have a radius of curvature (R1) larger than a minimum radius of curvature (Rmin) of at least 0.1 mm (i.e., Rmin $\geq$ 0.1 mm), preferably at least 1 mm (i.e., Rmin $\geq$ 1 mm), more preferably at least 3 mm, more preferably at least 4 mm.

The incisions (1) preferably have a same geometry of single curvature incision with a chord extending parallel to the Y-axis, for example an arc of circle of radius (R1) comprised between 1 and 10 mm, preferable between 2 and 5 mm, and is more preferably equal to 3.4 $\pm$ 0.4 mm. The incision preferably has a radius ratio (R1 / x1) of the radius (R1) to the incision length (x1) comprised between 0.4 and 1.0, preferably between 0.5 and 0.7.

The magnitude of the incisions length (x1) and incision height (y1) depends on the dimensions of the ply and, ultimately, of the composite part to be processed. For example, if the incised composite ply has a width (W) measured along the X-axis, then a length ratio (x1 / Wj of the incision length (x1) to the incised composite ply width (W) can be equal to at least 5 (i.e., x1 / W $\geq$ 5), preferably to at least 10 (i.e., x1 / W $\geq$ 10), more preferably at least 20 (i.e., x1 / W $\geq$ 20). The length ratio (x1 / W) is preferably not more than 30, preferably not more than 25, more preferably not more than 20. In some embodiments, the incision length (x1) can be comprised between 3 and 25 mm (i.e., 3 $\leq$ x1 $\leq$ 25 mm), preferably 5 $\leq$ x1 $\leq$ 15 mm. The corresponding incision height (y1) can be comprising between 0.25 and 25 mm (i.e., 0.25 $\leq$ y1 $\leq$ 25 mm), preferably 1.5 $\leq$ y1 $\leq$ 10 mm.

It is preferred that all incisions are curved and more preferred that they are all identical to one another. Up to 50% of the incisions, however, can be straight, as shown in Figure 1(d). The straight incisions must be distributed over the main surface of the ply according to a repetitive pattern. The incisions (1) may not extend through the whole thickness of the composite ply, but it is preferred that they do extend through the whole thickness of the composite ply. In continuation, the discussion assumes that the incisions extend through the whole thickness of the composite ply.

The curvilinear geometry of the incisions (1) has the unexpected effect of facilitating the formation of the incisions when using rollers with protruding knives in the shape of the protrusions as shown in Figures 13(a) and 13(b). Indeed, when straight protruding knives (31) of the rollers (30i) hit the US-composite ply (10n), they punch through it over the whole incision length (x1) at once. This creates an impact generating substantial noise and wearing the edges of the protruding knives. With curved incisions (1) according to the present invention, the knives (31) progressively penetrate through the UD-composite ply (10n) from single points, cutting through the UD-composite ply (10n) along the length of the curved incisions (1), in the same manner as scissors cut through paper. A substantial reduction of the noise generated by the incising operation was observed. The process could be run at a substantially higher rate, by feeding the UD-composite ply at twice the rate it can be fed with straight protrusions. Finally, the service life of the cutting knives was prolonged considerably. All these advantages by simply replacing straight incisions by curved incisions according to the present invention were quite surprising.

## INCISIONS DISTRIBUTION PATTERNS

### Incisions distribution pattern - general

The incisions (1) are distributed over the ply main surface such as to not contact one another. Two incisions contacting each other would form a single incision. They are distributed according to a repetitive pattern, such that they are aligned and evenly distributed along the X-axis and are aligned and evenly distributed along the Y-axis. For example, the rectangles inscribing the incisions (1) can be distributed according to a repetition of a pattern defining a unit cell (11) as shown in Figures 1(a) to 1(f), and 5(a) - 5(c) to 8(a) - 8(c). The unit cells (11) are repeated to pave the first and second main surfaces along both X-axis and Y-axis. The unit cell (11) has a length measured along the Y-axis equal to the first length (L1). A distribution of the incisions according to a repetitive pattern is important for the predictability and repeatability of the mechanical properties of parts produced from the incised composite plies of the present invention.

As shown in Figures 1(a), the paving of the main surface with the unit cells (11) can be according to an orthogonal pattern, with rectangular unit cells (11) aligned along both X- and Y-axes. It is also possible to pave the main surface of the ply obliquely with unit cells (11) in the shape of parallelograms, as shown in Figure 1(b). An orthogonal paving is preferred for ease of reproducibility upon stacking plies to form a composite preform.

As shown in Figure 5(a), in a preferred embodiment, the rectangles inscribing the incisions (1) are aligned and evenly distributed over a diagonal forming an angle ($\alpha$) with the Y-axis, wherein preferably, tan $\alpha$ = x1 / (y1 + yXr).

In a preferred embodiment, the X-distance (x11-separating two rectangles on a same X-row (Xr) is comprised between 2.25 and 25 mm (i.e., 2.25 $\leq$ x11 $\leq$ 25 mm), preferably 5 $\leq$ x1 $\leq$ 15 mm. Alternatively or concomitantly, the Y-distance (y11) separating two rectangles in a same Y-column is comprised between 20 and 100 mm (i.e., 20 $\leq$ y11$\leq$ 100 mm), preferably, 50 $\leq$ y11$\leq$ 75 mm. Note that L1 = y11 + y1, as can be appreciated e.g., from Figure 2(a).

The incision distribution pattern must be selected to optimize, on the one hand, a repetitive pattern so that to enhance reproducibility of the stacking of various incised composite plies on top of another to form a composite preform, whose properties are constant and, on the other hand, to ensure that the first fibre length (L1) and optionally the mean second and third fibre lengths (L2a, L2b) are sufficiently long to yield mechanical properties comparable with continuous fibre reinforced composites, with the advantage of a substantially better drapeability for the manufacturing of complex geometry parts.

**First length (L1)**

The incisions distribution must also ensure a uniformity of the fibre lengths. In particular, the first length (L1) of the fibres must be uniformly distributed over the main surface of the composite ply. From 75% to 100% of the fibres have the first length (L1). They therefore ensure a substantial portion of the mechanical strength of the final composite part. The first length (L1) must be sufficiently long to reduce the gap of mechanical properties with continuous fibre plies (i.e., with no incision). Figures 4(a) to 4(c) illustrate the effect of fibre length (l) on mechanical properties of a composite part. Three fibres embedded in a polymeric matrix under loads are shown with different lengths (l) expressed relative to the critical length (lc): (a) l < 2lc, (b) l = 2lc, and (c) l > 2lc, with corresponding transfer of shear stress and tensile stress transferred from the loaded matrix to the fibres. When a composite part is loaded, the polymer matrix transfers the stress to the stronger fibres. Depending on a number of parameters, including fibre / matrix adhesive strength, fibre radius, and the like, the stress is fully transferred from the matrix to the fibre over a portion of the fibre referred to as the critical length (lc). Maximum load ($\sigma$m) is reached only if the fibre length is greater than 2 lc (l > 2lc). The maximum load ($\sigma$m) is supported by the fibre portion (l -lc) / l, which tends towards 100% for large values of (l - lc). The critical length (lc) depends on the specific fibre / matrix system used. The skilled person knows how to measure experimentally or evaluate mathematically the value of the critical length (lc) of a specific fibre / matrix system.

As a rule of thumb, the critical length (lc) can be comprised between 0.2 and 4 mm, generally between 0.5 and 3 mm. It is preferred that the first length (L1) be such that (L1 - lc) / L1 be at least equal to 50% (i.e., L1 - lc) / L1 $\geq$ 50%); preferably, at least equal to 75% (i.e., L1 - lc) / L1 $\geq$ 75%). The first length (L1) is preferably comprised between 40 and 100 mm, more preferably, between 50 and 80 mm.

In a preferred embodiment, the first length (L1) is equal to a product of (n + 1) to a unit length (Lm) (i.e., L1 = (n + 1) Lm) with Lm = (yXr + y1), wherein yXr is the X-row distance separating two adjacent X-rows along the Y-axis and n is the number of columns separating two adjacent rectangles on a same X-row (Xr). The unit length (Lm) can be comprised between 10 and 50 mm, and wherein the first length (L1) is preferably comprised between 40 and 100 mm, more preferably, between 50 and 80 mm

**100% of fibres have first length (L1) (i.e., f2 = 0)**

In a preferred embodiment, the incisions (1) are so distributed that 100% of the fibres have the first length (L1), so that the second weight fraction, f2 = 0. This requires the rectangles inscribing the incisions (1) to be aligned and evenly distributed in corresponding Y-columns (Yc) as identified in Figure 8(a). The Y-columns (Yc) extend over the ply length along the Y-axis and wherein in each Y-column, (Yc) the rectangles are separated from one another by a Y-incision distance (y11) measured along the Y-axis, which is equal to, y11 = (n + 1) yXr + n y1.

In this embodiment, it is preferred that the rectangles inscribing the incisions (1) are aligned and evenly distributed in corresponding X-rows (Xr)), wherein the X-rows extend over the ply width along the X-axis and are separated from one another by an X-row distance (yXr) measured along the Y-axis. In each X-row, the rectangles are separated from one another by an X-distance (x11) measured along the X-axis, which is equal to N times the incision length (x1) (i.e., x11 = N $\times$ x1), with N e N and N $\geq$ 1 and preferably N $\geq$ 2, or N $\geq$ 3, or N $\geq$ 4. If follows that the same positions of incisions are repeated every N Y-columns (Yc) and the Y-columns are adjacent to one another with no overlap, or distance separating them, as illustrated e.g., in Figures 3(a).

**< 100% of fibres have first length (L1) (i.e., f2 > 0)**

If the Y-columns (Yc) overlap or are separated from one another by a distance, then the second weight fraction f2 > 0, with fibres cut by the incisions (1) at second and optionally mean third lengths (L2a, L2b). Two cases must be distinguished: (a) the Y-columns are separated by a distance, and (b) the Y-columns overlap with one another. These two cases can be characterized by a factor $1/k = N/n$, wherein n is the number of Y-columns separating two adjacent rectangles on a same X-row (Xr), with $n \in \mathbb{N}$ and $n \geq 1$ and preferably $n \geq 2$, or $n \geq 3$, or $n \geq 4$, and N is defined as before as $x11 = N \times x1$, but here N is not necessarily an integer. The factor $1/k$ can take the following values:

- $1/k = 1$ (i.e., $N = n$), characterises a pattern wherein the Y-columns are contiguous (i.e., neither overlap with, nor are separated from one another), and all the fibres are cut at the first length (L1); this embodiment is illustrated in Figure 3(a).

- $1/k > 1$ (i.e., $N > n$), characterises a pattern wherein the Y-columns are separated from one another by a distance, so that the first weight fraction (f1) of fibres are cut at the first length (L1) and the complementary second fraction (f2) are uncut and are continuous; this embodiment is illustrated in Figure 3(c).

- $1/k < 1$ (i.e., $N < n$), characterises a pattern wherein the Y-columns overlap with one another, so that the first weight fraction (f1) of fibres are cut at the first length (L1) and a first portion of the complementary second fraction (f2) are cut at a mean second length (L2a) and a second portion of the complementary second fraction (f2) are cut at a mean third length (L2b); this embodiment is illustrated in Figure 3(b).

Figure 3(d) shows that, if the Y-columns are offset, a factor $1/k = 1$ can also yield a second fraction (f2) with fibres of mean second length (L2a) and continuous fibres of infinite mean second length (L2b). For this reason, although the embodiment of Figure 3(d) is according to the present invention, in continuation the discussion assumes that the Y-columns are evenly distributed and not offset.

Referring to Figures 3(a) to 3(c), the following major cases can be listed,

- $1/k = 1 + f2 > 1$, and $L2a = L2b$, with $L2a \rightarrow \infty$, or
- $1/k = 1 - f2 < 1$ and

    ○ $L2a = L2b$, with $0 < L2a < L1$, or
    ○ $L2a \neq L2b$, with $0 < L2a < L1$ and $0 < L2b < L1$, or

- $1/k = 1$, then $f2 = 0$ and $L2a = L2b = 0$. This case was discussed supra.

### $1/k > 1$, L1 and L2a = continuous fibres

As shown in Figures 3(c), 5(b), 6(b), and 7(b), the Y-columns (Yc) can be separated from one another by a distance and the distribution pattern is characterised by a factor $1/k > 1$. In this embodiment, all fibres are not cut to the first length (L1) and the second weight fraction (f2) of fibres are uncut and continuous. When this embodiment has the advantage of giving the preform more integrity and stability along the Y-axis and contributing to increasing mechanical properties of a composite part along the fibre direction (Y-axis), the presence of continuous fibres distributed between Y-columns of fibres of first length (L1) reduces the drapeability of the incised composite ply along the Y-axis. For this reason, a distribution pattern characterised by a factor $1/k > 1$ must be used only in specific applications where the resulting drapeability suffices, and the second weight fraction (f2) of continuous fibres must be carefully controlled.

## $1/k < 1$, L1 ≠ L2a = L2b

As shown in Figures 2(b), 3(b), and 5(c), the Y-columns (Yc) can overlap with one another and the distribution pattern characterised by a factor $1/k < 1$, with the first weight fraction (f1) of fibres cut at the first length (L1) and the second weight fraction (f2) of fibres cut at a mean second length (L2a = L2b). This configuration is possible when the number n of columns separating two adjacent rectangles on a same X-row (Xr) is equal to 1 (i.e., $1/k < 1$ and $n = 1$). When all fibres of the first weight fraction (f1) have substantially the same first length (L1), this is not the case with the second weight fraction (f2) of fibres, which second length varies by twice a variation factor $\pm 2\delta$ around the mean second length (L2a), as shown in Figure 2(b). The variation factor ($\delta$) is generally smaller than the incision height (y1). In this embodiment, $L2a = \frac{1}{2} L1$.

## $1/k < 1$, L1 ≠ L2a ≠ L2b

As shown in Figures 6(c), and 7(c), the Y-columns (Yc) can overlap with one another and the distribution pattern characterised by a factor $1/k < 1$, with the first weight fraction (f1) of fibres cut at the first length (L1) and a portion of the second weight fraction (f2) of fibres cut at a mean second length (L2a) and the rest of the fibres of the second weight fraction being cut at a third length (L2b ≠ L2a). This configuration is possible when the number n of columns separating two adjacent rectangles on a same X-row (Xr) is greater than 1 (i.e., 1 / k < 1 and n >1). In this configuration, L1 > L2a > L2b, and L1 = L2a + L2b. Care must be taken to not have a too large proportion of fibres of mean third length (L2b) which are the shortest fibres in the incised composite ply and could degrade some mechanical properties if their proportion is too high.

## MULTIPLY COMPOSITE PREFORM (20)

The incised composite plies (10) of the present invention are used to form multiply composite preform (20), for the production of final composite parts which can have complex geometries. The multiply composite preform (20) of the present invention comprises two or more composite plies stacked on top of one another, wherein at least a first composite ply (10a) among the two or more composite plies is the incised composite ply (10) as described supra. Individual composite plies can be stacked on top of one another in a "conventional" manner with a control of the fibres orientation of each composite ply depending on the mechanical requirements of the composite part to be produced. Alternatively, UD-incised two-ply composite preforms (202), can be produced, which form integral preform units that can be stacked on top of one another in the same fashion as previously described.

## Stack of individual composite plies

In a first embodiment, the multiply composite preform (20) is formed by stacking a number of individual composite plies (including at least one incised composite ply), as is conventionally carried out with continuous fibre reinforced preforms. The orientation of the fibres in each ply is carefully controlled depending on the requirements of the composite part to be produced therewith. For example, all composite plies can be oriented along a same fibre orientation forming a UD-multyply composite preform, as shown in Figure 10(f) with all composite plies being incised composite plies with same fibre orientation forming a UD-multiply incised composite preform (20). Alternatively, the orientation of the fibres can vary with some or each composite ply. For example, a quasi-isotropic composite part can be formed by stacking composite plies in one or more sequences of fibres orientation along -45 / 90 / 45 / 0 as illustrated in Figures 10(a) 10(b), 10(d), and 10(e). All composite plies can be incised composite plies (10) as shown in Figure 10(a), thus forming a quasi-isotropic incised composite preform. Alternatively, some plies of the multipy composite preform are not incised composite plies. For example, the one or more plies which are not incised composite plies can be anyone or a combination of,

- a ply of unidirectional long fibres with no incisions, as shown in Figure 10(b),
- a woven fabric of long fibres combined with a resin or mixed with a solid thermoplastic polymer, as shown in Figure 10(c),
- a fabric comprising metal threads (e.g., Al, or Cu),
- a randomly oriented short fibre reinforced composite ply,
- a sheet of material as shown in Figure 10(d), giving specific properties, such as barrier properties, antistatic, conductivity, colour, surface finish, reflection to or absorption of radiations: for example, a conductive metal sheet, preferably made of aluminium or copper and preferably in the form of stripes.
- and the like.

For example, inserting a lower performance ply in the middle of the stack as shown in Figure 10(e), can be advantageous in terms of costs if the composite part must have good flexural properties, where the central plane of flexure is not strained considerably. Including a sheet giving additional functionalities as shown in Figure 10(d) has become a necessity in technical fields where multifunctional parts are required. Including a fabric can affect the drapeability of the preform, in particular if a weave is used. Knitted or braided fabrics give high drapeability to the preform but lose in fibre orientation (in particular knitted fabrics).

## UD- incised two-ply composite preform (202)

As discussed supra, the incisions (1) give greater flexibility and drapeability to the incised composite plies (10) and to the multiply composite preforms (20) formed therewith. Care must be taken, however, not to weaken the composite part by forming easy paths of crack propagation following overlapping incisions (1) on two adjacent incised composite plies forming the multiply composite preform (20). For example, a UD-multiply incised composite preform (20) as illustrated in Figure 10(f) will have higher mechanical properties if the incised composite plies (10) are stacked with their incisions (1) offset from one incised composite ply to the next, than if they are stacked with their incisions (1) aligned on top of each other, thus forming regions of pure polymer extending through the whole thickness of the composite part. It cannot be reasonably requested to the operators stacking the individual incised composite plies to make sure that the incisions are offset between the incised composite plies.

To solve this problem, UD-incised two-ply composite preforms (202) can be formed, that can be used as preform unit to form a multiply composite preform (20). The UD-incised two-ply composite preform formed by two identical incised composites plies (10) stacked on top of one another with the fibres arranged with a same orientation forming a UD-incised two-ply composite preform (202). The two incised composite plies (10) are stacked with a Y-shift ($\Delta y$) over the Y-axis and / or by an X-shift ($\Delta x$) over the X-axis, creating an offset such that the incisions (1) of the two incised composite plies (10) do not overlap with one another by more than 20% of the incision length (x1), and they preferably do not overlap at all. The two incised composite plies are at least locally fixed to one another to form an integral UD-incised two-ply composite preform. The two incised composite plies (10) can be fixed to one another by e.g., locally melting the thermoplastic matrix of the two plies, by locally stitching the plies, by locally applying spots of glue, and the like. The fixing points should be sufficient to give the UD-incised two-ply composite preform enough integrity to be handled by operators, and sufficiently loose to allow relative movements of the fibres of the two incised composite plies when draping them onto a mould.

With UD-incised two-ply composite preforms, even in the worst stacking scenario of a UD-incised multiply composite preform as illustrated in Figure 10(f), no continuous polymer path between fibres can be formed through the whole thickness of the preform following overlapping incisions (1). At worst, there will always be an alternating sequence of incisions with no or limited overlap.

**UD-incised two-ply composite preforms - Y-shift ($\Delta y$) and X-shift ($\Delta x$)**

Figures 11(a) and 11(b) show two examples of UD-incised two-ply composite preforms (202) with (a) a Y shift ($\Delta y$) only and (b) a X shift ($\Delta x$), ensuring that no or only limited incisions overlap occurs between the two incised composite plies (10) forming the UD incised two-ply composite preforms (20). It is preferred that the Y-shift ($\Delta y$) is equal to half the first length (L1) within 10% (i.e., $\Delta y = \frac{1}{2}$ L1 $\pm$ 10%). As shown in Figure 12(b), provided n $\neq$ 1 (i.e., there is more than one Y-column (Yc) separating two adjacent incisions aligned on a same X-row (Xr)), a Y-shift $\Delta y = \frac{1}{2}$ L1 $\pm$ 10% ensures that the incisions (1) of the two incised composite plies (10) are distributed along the Y-columns as far apart from one another. A homogeneous distribution of the incisions along the X-rows is best obtained for odd values of n (i.e., n = 2 n0 +1, with $n0 \in \mathbb{N}$). This ensures that the ends of the fibres of a first incised composite ply (10) are staggered relative to the ends of fibres of the second incised composite ply (10) forming the UD-incised two-ply composite preform (20).

In this embodiment, the X-shift ($\Delta x$) can be equal to 0 (i.e., $\Delta x = 0$). Alternatively, the X-shift ($\Delta x$) can be larger than 0 (i.e., $\Delta x > 0$) and is preferably equal to half the X-distance (x11) within 10% (i.e., $\Delta x = \frac{1}{2}$ x11 $\pm$ 10%), as illustrated in Figure 12(a), with n = 1.

Alternatively, the Y-shift ($\Delta y$) can be null and the X-shift ($\Delta x$) can be larger than 0 (i.e., $\Delta x > 0$) and is preferably equal to half the X-distance (x11) within 10% (i.e., $\Delta x = \frac{1}{2}$ x11 $\pm$ 10%), as shown in Figure 12(c).

**PROCESS FOR PRODUCING AN INCISED COMPOSITE PLY (10)**

As illustrated in Figures 13(a) and 13(b), the incised composite plies (10) of the present invention can be produced by a process comprising,

- providing a composite ply (10n) comprising long fibres, preferably continuous fibres, aligned unidirectionally along the Y-axis and combined with a polymer binder,
- feeding the composite ply in the Y-direction to a cutting apparatus configured to cut incisions through a portion or a whole of the ply thickness, to produce the incised composite ply (10).

The cutting apparatus can comprise an incising roller (30i) and a counter surface (30c) wherein the incising roller (30i) comprises cutting protrusions (31) distributed over an outer surface thereof configured for cutting through a portion or a whole of the thickness of the ply (1n) the corresponding incisions as the ply is continuously fed and proceeds between the incising roller (30i) and the counter roller (30c).

As mentioned earlier, the curved geometry of the incisions (1) allows a smoother and progressive penetration of the cutting protrusions (31) through the thickness of the composite ply (10n), in the manner of scissors cutting through paper. This contrasts with straight cutting protrusions punching in a block through the thickness of the composite ply (10n), which is much more demanding on the cutting protrusions that wear rapidly, and is very noisy, to the discomfort of the workers present close to the cutting apparatus. Feeding the composite ply to the cutting apparatus can be achieved at substantially higher rates with curved protrusions according to the present invention, than with straight protrusions.

As shown in Figure 13(a), the composite ply (10n) can be provided with a removable release layer (12). This is often used with for example prepregs which have a certain tackiness to facilitate handling thereof. In this case, it is preferred that the cutting protrusions (31) do not cut through the removable release layer (12) so that it can keep its integrity, thus facilitating the removal thereof upon forming stacks to produce multiply-incised composite preforms.

In other embodiments illustrated in Figure 13(b), the composite ply (10n) is devoid of any release layer. In this case, there is no problem to form incisions cutting through the entire thickness of the incised composite ply (10) as this would retain sufficient integrity for handling, as the incisions (1) are separated from one another.

**PROCESS FOR PRODUCING A MULTIPLY COMPOSITE PREFORM (20)**

A multiply composite preform (20) can be produced with a process comprising (a) providing a first composite ply, (b) laminating the first composite ply with one or more composite plies, (c) preferably at least punctually fixing the first incised composite ply (10a) and one or more other composite plies to one another, wherein at least the first composite ply, preferably all the one or more composite plies are incised composite plies according to the present invention. If any of the incised composite plies (10) comprises a removable release layer (12), this shall be removed when laminating the first composite ply with the one or more composite plies.

Figure 14(a) illustrates a process for producing UD-incised two-ply composite preforms (202), comprising a cutting apparatus as described supra for the production of an incised composite ply (10) equipped with an incising roller (30i) and a counter surface (30c) to create the incisions, and a cutting station (31c) to cut the continuous incised composite ply (10) into discrete incised composite plies (10a, 10b). The cutting station (31c) is followed by a stacking station, stacking two-by-two the discrete incised composite plies with a Y shift and / or an X shift to form UD-incised two-ply composite preforms (202).

Figure 14(b) shows an alternative process for producing UD-incised two-ply composite preforms (202). The apparatus comprises two cutting stations, each equipped with an incising roller (30i) and a counter surface (30c) to create two continuous incised composite preforms (10a, 10b). These are combined on top of one another with a Y shift and / or an X shift to form a continuous UD-incised two-ply composite preform (202), which is either cut at a cutting station (31) to form discrete UD-incised two-ply composite preforms (202) (cf. branch (1) of Figure 14(b)), or rolled to form a continuous roll of UD-incised two-ply composite preform (202) (cf. branch (2) of Figure 14(b)).

**PROCESS FOR PRODUCING A COMPOSITE ARTICLE (90)**

The incised composite plies (10) can be used to produce multiply composite preforms (20), which can be used to produce composite articles (90) in a process illustrated in Figure 15 comprising,

- providing a multiply composite preform (20) according to the present invention (cf. Figure 15 - (A)),
- cutting the multiply composite preform (20) to form a sub-preform (80p) whose geometry is adapted to a geometry of the composite article (90) (cf. Figure 15 - (B)),
- optionally, assembling different sub-preforms (80p) to form a final preform (90p) of the composite article (90) (cf. Figure 15 - (C)),
- depositing the sub-preform (80p) or the final preform (90p) in a mould (100),
- applying pressure and heat to consolidate the sub-preform (80p) or final preform (90p) and thereby forming the composite article (90) (cf. Figure 15 - (D)), and
- removing the composite article (90) from the mould (cf. Figure 15 - (E)).

Composite parts with double curvature complex geometries were successfully produced with the incised composite plies (10) of the present invention, which could not have been formed using corresponding composite plies (10n) with continuous fibres (i.e., without incisions (1)).

Figure 16 shows schematically on a graph the mechanical performance of a composite part as a function of the complexity of the geometry of the parts that can be processed from the different preforms represented. At the far left of the graph, representing the more rigid preforms that do not allow the formation of composite parts with complex geometries, with preforms formed by a stack of unidirectional prepregs (UD) with different sequences of reinforcement angles (UD - 0°, UD - 90°, UD - 0 / 90, and UD - Q.iso). The UD - 0° preform is a mat formed from UD prepregs all aligned at a reinforcement angle of 0°. It represents the benchmark in terms of mechanical properties in the longitudinal direction (D) (i.e. at 0°) in the aerospace industry, it has, however, drawbacks. On the one hand, UD-prepregs have poor mechanical properties in a direction normal to the fibres (see the UD - 90° preform) and,, on the other hand, the preforms have high rigidity, which gives very little freedom in the complexity of the parts formed by such a preform.

The UD - 0 / 90 and UD - Q.iso (Q.iso = quasi-isotropic) preforms are also stacks of UD prepregs but arranged in sequences (0° / 90°) and (+45° / 0° / 45° / 90°), respectively. Such sequences improve the mechanical properties in directions other than 0° but reduce the properties in the longitudinal direction as a function of the proportion of fibres that are not oriented at a reinforcement angle of 0°. The change in fibre orientation sequences in prepreg-formed preforms has no significant influence on the flexibility of the preform. Such preforms therefore have a very low potential to form parts with complex geometries.

A stack of woven plies (W - 0 / 90, W = weave) gives a little more flexibility to the preform, depending on the type of weave (e.g., satin 8), but not significantly.

In the lower right-hand corner are SMCs, which allow the formation of parts with complex geometries, but with disappointing mechanical properties, and low reproducibility as the fibres are oriented randomly.

Finally, on the right hand side, well above the SMC, we find incised multiply preforms (20) according to the present invention, formed from incised composite plies (10) in various sequences of reinforcement angles (INV - 0°, INV - 0/90, INV - Q.iso). These preforms have mechanical properties similar to (albeit slightly lower than) those obtained from UD prepregs, but with significantly greater flexibility, enabling them to conform to complex mould shapes and form composite parts with complex geometries. The graph in Figure 16 shows that a huge gap at the top right of the graph has now been filled by the present invention.

**CONCLUDING REMARKS**

The present invention proposes an incised composite ply giving the advantage over continuous (non-incised) plies of a substantially higher drapeability, allowing articles of more complex geometries to be manufactured with oriented long fibres reinforced composites. With their curved incisions, the incised composites plies of the present invention are advantageous over the incised composites plies of the state of the art, for the following reasons.

A major advantage is a substantially longer service time of the cutting tools. Without wishing to be bound by any theory, it is believed that this prolongation of the service time can be ascribed to the scissor's effect, as the blade penetrates the ply at a single point and progressively cuts through the ply along the curvature of the incisions. This is in contrast with the punching effect observed when a straight blade hits the ply over the full length thereof to punch an incision. The blades of the cutting tool remain sharp a substantially longer time with curved incisions according to the present invention than with straight incisions.

The preservation of the cutting tool properties also has a substantial advantage at an industrial scale, as it allows a repeatability of the geometry of the incisions over a large volume of production, thus requiring less frequent quality controls and interruptions of production the time of changing the tool.

With the scissor's effect, the curved incisions are also "cleaner" than with the punching effect applied with straight incisions, with less fibrils loose at the lips of the incisions. This is also an important factor for reproducibility.

The scissor's effect also generates less impacts and vibrations of the during formation of the incisions. This allowed the line to be run at a higher rate, feeding the (non-incised) composite ply to the cutting tool at a higher rate. The lower impacts and vibrations also substantially reduce the level of noise generated by this operation to the benefit of the operators.

The alignment and even distribution of the curved incisions along the X-axis and along the Y-axis improves the reproducibility of the properties of an article formed of multiple plies stacked on top of each other, since the overlap of incisions from different plies can be controlled and reproduced. Reducing the width of the distribution of a property (e.g., a mechanical property) measured over a large number of samples, allows lighter parts to be designed, requiring lower safety margins. This is essential for the aerospace industry.

Preliminary tests also suggest that the mechanical properties of composite samples according to the present invention may be slightly improved compared with the same composite samples produced with straight incisions. Without wishing to be bound by any theory, it is believed that this can be explained by cracks initiated at the ends of an incision generally progress in a same direction as the incision as the end points thereof. Comparing the X-row of straight incisions in the ply illustrated in Figure 1(d) with the adjacent X-row of curved incisions, it can be observed that the crack progressing parallel to the ends of the straight incision can reach the next straight incision is a straight and short line. By contrast, the crack progressing parallel to the ends of the curved incisions will follow a downwards trajectory, either until it reaches another crack initiated from an end of an incision of the adjacent X-row, or of an adjacent incision in the same X-row. More tests are required to confirm this theory.

| REF | DESCRIPTION |
| --- | --- |
| 1 | incision |
| 10 | Incised composite ply |
| 10a | First composite ply of a multiply composite preform 20 |
| 10b | Second composite ply of a UD-incised two-ply composite preform 202 |
| 11 | Unit cell |
| 12 | Removable release layer |
| 20 | Multiply composite preform |

(continued)

| REF | DESCRIPTION |
|---|---|
| 30c | Counter roller |
| 30i | Incising roller |
| 31 | Cutting protrusions |
| 31c | Cutting station |
| 80p | Sub-preform |
| 90 | Composite article |
| 90p | Final preform |
| 100 | Mould |
| 202 | UD-incised two-ply composite preform |
| | |
| f1 | First weight fraction of fibres of first length L1 |
| f2 | Second weight fraction of fibres of mean second and third lengths L2a, L2b |
| 1 / k | Factor 1 / k = N / n |
| l | Fibre length |
| lc | Critical length |
| L1 | First length (of fibres) |
| L2a | Mean second length (of fibres) |
| L2b | Mean third length (of fibres) |
| Lm | Unit length |
| n | Number of columns separating two adjacent rectangles on a same X-row Xr |
| N | N = x11 / x1 = 1 / (k n) |
| X | X-axis perpendicular to fibre direction |
| Xr | X-row |
| x1 | Incision length (along X-axis) |
| x11 | Distance seaparating two adjacent rectangles in a same X-row (along the X-axis) |
| Y | Y-axis parallel to fibre direction |
| Yc | Y-column |
| yXr | Distance separating two adjacent X-row (Xr) along the Y-axis |
| y1 | Incision height (along Y-axis) |
| y11 | Distance separating two adjacent X-rows along the Y-axis |
| Z | Z-axis perpendicular to X- and Y-axes |
| | |
| $\alpha$ | Angle between fibre direction and diagonal formed by rectangles |
| $\delta$ | Variation factor of L2a and L2b |
| $\Delta x$ | X shift |
| $\Delta y$ | Y shift |

**Claims**

1. Incised composite ply (10) having first and second main surfaces separated from one another by a ply-thickness measured along a Z-axis, and having a ply length measured along a Y-axis and a ply width measured along an X-axis, with $X \perp Z$ and $Y \perp Z$, and comprising long fibres aligned unidirectionally along the Y-axis and combined with a polymer binder,

   wherein the incised composite ply comprises incisions (1) extending from a first end to a second end and cutting the incised composite ply through a whole or a portion of the ply-thickness,
   wherein the incisions (1) are aligned and evenly distributed along the X-axis and are aligned and evenly distributed along the Y-axis, such that,

   • a first weight fraction (f1) of the long fibres has a first length (L1) measured along the Y-axis which is constant, wherein the first weight fraction (f1) is from 75% to 100% (i.e., 75% $\leq$ f1 $\leq$ 100%), and
   • a second weight fraction (f2) of the long fibres complementary of the first weight fraction (f1) (i.e., f2 = 1 - f1) has a mean second length (L2a) and a mean third length (L2b) measured along the Y-axis which are constant and different from the first length (L1) and are either,

   ○ different from one another (i.e., L2a and L2b $\neq$ L1, L2a $\neq$ L2b) wherein lengths of the long fibres of the second weight fraction (f2) of mean second length (L2a) vary within $\pm 2\delta$ from the mean second length (L2a), and wherein lengths of the long fibres of the second weight fraction (f2) of mean third length (L2b) vary within $\pm 2\delta$ from the mean third length (L2b), with $\delta \leq$ ½ y1, or
   ○ equal to one another (i.e., L2a and L2b $\neq$ L1, L2a = L2b), wherein lengths of the long fibres of the second weight fraction (f2) of mean second length (L2a) vary within $\pm 2\delta$ from the mean second length (L2a),

   **characterized in that,** at least 50%, preferably 100% of the incisions (1),
   • are curved and comprise one or more portions having a convex side oriented along the Y-axis and having a radius of curvature (R1) is larger than a minimum radius of curvature (Rmin) of at least 0.1 mm (i.e., Rmin $\geq$ 0.1 mm), preferably at least 1 mm (i.e., Rmin $\geq$ 1 mm), and
   • have a geometry inscribed in corresponding rectangles, which have an incision length (x1) measured along the X-axis and an incision height (y1) measured along the Y-axis, and an aspect ratio (x1 / y1) of the incision length (x1) to the incision height (y1) of at least 1 (i.e., x1 / y1 $\geq$ 1), preferably at least 2 (i.e., x1 / y1 $\geq$ 2), and is preferably not more than 12 (i.e., x1 / y1 $\leq$ 12), more preferably not more than 8 (i.e., x1 / y1 $\leq$ 8), most preferably not more than 6 (i.e., x1 / y1 $\leq$ 6).

2. Incised composite ply according to claim 1, wherein the rectangles inscribing the incisions (1) are distributed according to a repetition of a pattern defining a unit cell (11) paving the first and second main surfaces along both X-axis and Y-axis, wherein the unit cell (11) has a length measured along the Y-axis equal to the first length (L1).

3. ncised composite ply according to claim 1 or 2, wherein

   • the rectangles inscribing the incisions (1) are aligned and evenly distributed in corresponding X-rows (Xr)), wherein the X-rows extend over the ply width along the X-axis and are separated from one another by an X-row distance (yXr) measured along the Y-axis, wherein in each X-row, the rectangles are separated from one another by an X-distance (x11) measured along the X-axis, which is equal to N times the incision length (x1), wherein N = n / k, with 1 / k = 1 - f2 or 1 / k = 1 + f2, and is comprised between 0.75 $\leq$ 1 / k $\leq$ 1.25, preferably 0.9 $\leq$ 1 / k $\leq$ 1.1, more preferably, 1 / k = 1 $\pm$ 0.05, and wherein $n \in \mathbb{N}$ and n $\geq$ 1 and preferably n $\geq$ 2, or n $\geq$ 3, or n $\geq$ 4, and / or
   • the rectangles inscribing the incisions (1) are aligned and evenly distributed in corresponding Y-columns (Yc), which extend over the ply length along the Y-axis and wherein in each Y-column, (Yc) the rectangles are separated from one another by a Y-incision distance (y11) measured along the Y-axis, which is equal to,

$$y11 = (n + 1)\, yXr + n\, y1.$$

4. Incised composite ply according to claim 2 or 3, wherein the rectangles inscribing the incisions (1) are aligned and evenly distributed over a diagonal forming an angle ($\alpha$) with the Y-axis, wherein preferably, tan $\alpha$ = x1 / (y1 + yXr).

5. Incised composite ply according to any one of claims 2 to 4, wherein the first length (L1) is equal to a product of (n + 1) to a unit length (Lm) (i.e., L1 = (n + 1) Lm) with Lm = (yXr + y1), wherein the unit length (Lm) is comprised between 10 and 50 mm, and wherein the first length (L1) is preferably comprised between 40 and 100 mm, more preferably, between 50 and 80 mm.

6. Incised composite ply according to any one of claim 2 to 4, wherein,

- 1 / k = 1 - f2 < 1 and L2a = L2b, with 0 < L2a < L1, or
- 1 / k = 1 - f2 < 1, and L2a ≠ L2b, with 0< L2a < L1 and 0 < L2b < L1, or
- 1 / k = 1 + f2 > 1, and L2a = L2b, with L2a →∞, or
- 1 / k = 1, then f2 = 0 and L2a = L2b = 0.

7. Incised composite ply according to any one of the preceding claims, wherein the curved incisions (1) either,

- have a single curvature and preferably have a geometry of an arc of a circle, an arc of an ellipse, an arc of a parabola, or any single curvature arcuated segment, and wherein all the incisions (1) are preferably oriented with their convex side facing a same direction along the Y-axis, or
- comprise two curved portions having their respective convex sides oriented in opposite directions along the Y-axis, forming an "S"-shape, or
- comprise two or more segments of radius of curvature larger than the maximum radius of curvature (Rmax) joined to one another by corresponding one or more of the curved portions.

8. Incised composite ply according to claim 7, wherein the incisions (1) have a same geometry of an arc of circle of radius (R1) comprised between 1 and 10 mm, preferable between 2 and 5 mm, and is more preferably equal to 3.4 ± 0.4 mm and having a radius ratio (R1 / x1) of the radius (R1) to the incision length (x1) comprised between 0.4 and 1.0, preferably between 0.5 and 0.7.

9. Incised composite ply according to any one of the preceding claims, wherein,

- The incised composite ply has a width (W) measured along the X-axis, and a length ratio (x1 / W) of the incision length (x1) to the incised composite ply width (W) is equal to at least 5 (i.e., x1 / W ≥ 5), preferably to at least 10 (i.e., x1 / W ≥ 10), more preferably at least 20 (i.e., x1 / W ≥ 20), and / or
- The length ratio (x1 / W) is not more than 30, preferably not more than 25, more preferably not more than 20, and / or
- $3 \leq x1 \leq 25$ mm, preferably $5 \leq x1 \leq 15$ mm, and / or
- $0.25 \leq y1 \leq 25$ mm, preferably $1.5 \leq y1 \leq 10$ mm, and / or
- $2.25 \leq x11 \leq 25$ mm, preferably $5 \leq x1 \leq 15$ mm, and / or
- $20 \leq y11 \leq 100$ mm, preferably, $50 \leq y11 \leq 75$ mm.

10. Multiply composite preform (20) comprising two or more composite plies stacked on top of one another, **characterized in that,** at least a first composite ply (10a) among the two or more composite plies is the incised composite ply (10) according to any one of the preceding claims.

11. Multiply composite preform (20) according to claim 10, wherein the composite plies other than the first composite ply (10a) either,

- are the incised composite plies (10) according to any one of the preceding claims and are identical to the first composite ply (10a) thus forming an incised multiply composite preform, or
- are not an incised composite ply according to anyone of the preceding claims and are plies selected among,

  ○ a ply of unidirectional long fibres with no incisions,
  ○ a woven fabric of long fibres combined with a resin,
  ○ a woven fabric of long fibres mixed with a solid thermoplastic polymer,
  ○ a fabric comprising metal threads,
  ○ a conductive metal sheet, preferably made of aluminium or copper and preferably in the form of stripes.

12. The multiply composite preform (20) according to claim 11, which is the incised multiply composite preform formed by two identical incised composites plies (10) stacked on top of one another with the fibres arranged with a same orientation forming a UD-incised two-ply composite preform (202), and wherein, the two incised composite plies are offset by a Y-shift ($\Delta y$) over the Y-axis and / or by an X-shift ($\Delta x$) over the X-axis, such that the incisions (1) of the two incised composite plies (10) do not overlap with one another by more than 20% of the incision length (x1), and they preferably do not overlap at all.

**13.** The multiply composite preform (20) according to claim 12, wherein the Y-shift ($\Delta y$) is equal to half the first length (L1) within 10% (i.e., $\Delta y = ½ \, L1 \pm 10\%$), and

• the X-shift ($\Delta x$) is equal to 0 (i.e., $\Delta x = 0$), or
• the X-shift ($\Delta x$) is larger than 0 (i.e., $\Delta x > 0$) and is preferably equal to half the X-distance (x11) within 10% (i.e., $\Delta x = ½ \, x11 \pm 10\%$).

**14.** Process for producing an incised composite ply (10) according to any one of claims 1 to 9, comprising,

• providing a composite ply (10n) comprising long fibres, preferably continuous fibres aligned unidirectionally along the Y-axis and combined with a polymer binder,
• feeding the composite ply in the Y-direction to a cutting apparatus configured to cut incisions through a portion or a whole of the ply thickness, to produce the incised composite ply (10),

wherein the cutting apparatus comprises an incising roller (30i) and a counter surface (30c) wherein the incising roller (30i) comprises cutting protrusions (31) distributed over an outer surface thereof configured for cutting through a portion or a whole of the thickness of the ply (1n) the corresponding incisions as the ply is continuously fed and proceeds between the incising roller (30i) and the counter roller (30c).

**15.** A process for producing the multiply composite preform (20) according to anyone of claims 10 to 12, comprising,

• providing a first composite ply,
• laminating the first composite ply with one or more composite plies,
• preferably at least punctually fixing the first incised composite ply (10a) and one or more other composite plies to one another,

**characterized in that,** the first composite ply is an incised composite ply according to anyone of claims 1 to 9.

**16.** Process for producing a composite article (90) comprising the following steps,

• providing a multiply composite preform (20) according to anyone of claims 10 to 12,
• cutting the multiply composite preform (20) to form a sub-preform (80p) whose geometry is adapted to a geometry of the composite article (90),
• optionally, assembling different sub-preforms (80p) to form a final preform (90p) of the composite article (90),
• depositing the sub-preform (80p) or the final preform (90p) in a mould (100),
• applying pressure and heat to consolidate the sub-preform (80p) or final preform (90p) and thereby forming the composite article (90), and
• removing the composite article (90) from the mould.

FIG.1(a)

FIG.1(b)

FIG.1(c)

FIG.1(d)

FIG.1(e)

FIG.1(f)

FIG.2(a) 1 / k = 1, n = 2

FIG.2(b)  1 / k < 1, n = 1

x1 = x11    x11 = x1

L1

10

1 / k = 1, n = 1

**FIG.3(a)**

x1    x11    ½ (x1-x11)    10

L1

y11

L2
L2

1 / k < 1, n = 1

**FIG.3(b)**

x1 x11    ½ (x11-x1)    10

L1

y11

L2 → ∞

1 / k > 1, n = 1

**FIG.3(c)**

Y
X

x1    x11    ½ (x1-x11)    10

L1

y11

L2
L2

1 / k = 1 (offset), n = 1

**FIG.3(d)**

l < 2lc

τ

σm

σ

Y

**FIG.4(a)**

l = 2lc

½ lc    ½ lc

τ

σm

σ

Y

**FIG.4(b)**

l > 2lc

½ lc    l - lc    ½ lc

τ

σm

σ

Y

**FIG.4(c)**

x1    x11 = (n / k) x1

y1
y11
L1
y1
yXr

10    11    1

**FIG.5(a)**   1 / k = 1, n = 1

x1    x11 = (n / k) x1

y1
y11
L1
y1
yXr

10    11    1

**FIG.6(a)**   1 / k = 1, n = 2

Y
X

x1    x11 = (n / k) x1

L2a → ∞

y11
L1
y1
yXr

10    11    1

**FIG.5(b)**   1 / k > 1, n = 1

x1    x11 = (n / k) x1

L2a → ∞

y11
L1
y1
yXr

10  11    1

**FIG.6(b)**   1 / k > 1, n = 2

x1    x11= (n / k) x1

L2b
L2a
Lm

y11
L1
y1
yXr

10    11    1

**FIG.5(c)**   1 / k < 1, n = 1

x1    x11 = (n / k) x1

L2b
L2a
Lm

y11
L1
y1
yXr

10  11    1

**FIG.6(c)**   1 / k < 1, n = 2

**FIG.7(a)**  1 / k = 1, n = 3

**FIG.7(b)**  1 / k > 1, n = 3

**FIG.7(c)**  1 / k < 1, n = 3

Yc Yc Yc Yc Yc Yc Yc Yc Yc

Xr→
Xr→
Xr→
Xr→
Xr→

y11

yXr

10    11         1

**FIG.8(a)** n = 1

x1    x11        x12

y11

yXr

10  11          1

**FIG.8(b)** n = 2

y11

yXr

10    11      1

**FIG.8(c)** n = 3

Y
↑
→ X

x1

$x1 = 2\ R1\ \sin\theta$

$y1 = R1(1-\cos\theta)$

θ

1

θ

R1

π/2−θ

**FIG.9(a)**

x1

y1

1

**FIG.9(b)**

x1

$Y1 = x1$

1

**FIG.9(c)**

x1

y1

1

**FIG.9(d)**

x1

y1

1

**FIG.9(e)**

x1

y1

1

**FIG.9(f)**

FIG.10(a)

FIG.10(b)

FIG.10(c)

FIG.10(d)

FIG.10(e)

FIG.10(f)

FIG.11(a) $\Delta x = 0, \Delta y \neq 0$

FIG.11(b) $\Delta x \neq 0, \Delta y = 0$

FIG.12(a) n = 1, $\Delta x \neq 0, \Delta y \neq 0$

FIG.12(b) n = 3, $\Delta x = 0, \Delta y \neq 0$

FIG.12(c) n = 3, $\Delta x \neq 0, \Delta y = 0$

FIG.13(a)

FIG.13(b)

FIG.14(a)

FIG.14(b)

**FIG.15**

**FIG.16**     **Complex geometry**

**EUROPEAN SEARCH REPORT**

Application Number

EP 23 19 5460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 974 842 B1 (MITSUBISHI CHEM CORP [JP]) 18 September 2019 (2019-09-18) | 1-10,12, 13,15,16 | INV. B29C70/14 |
| Y | * abstract; figures 1,2 * | 14 | B29C70/20 |
| | * paragraph [0023] * | | |
| | * paragraph [0027] * | | |
| | * paragraph [0035] - paragraph [0036] * | | |
| | * paragraph [0039] - paragraph [0040] * | | |
| | * paragraph [0050] * | | |
| | * paragraph [0053] * | | |
| | * paragraph [0055] * | | |
| | * paragraph [0076] - paragraph [0077] * | | |
| | * paragraph [0078] - paragraph [0081] * | | |
| | * paragraph [0104] * | | |
| | * paragraph [0108] * | | |
| | * paragraph [0034] * | | |
| | * paragraph [0029] * | | |
| | * paragraph [0066] - paragraph [0067] * | | |
| | * paragraph [0013] * | | |
| | * paragraph [0105] * | | |
| | * paragraph [0054] * | | |
| | ----- | | TECHNICAL FIELDS SEARCHED (IPC) |
| X | JP 2008 208343 A (TORAY INDUSTRIES) 11 September 2008 (2008-09-11) | 1-3,5, 10-16 | B32B |
| Y | * abstract; figures 4,5 * | 14 | B29B |
| | * paragraph [0004] * | | B29C |
| | * paragraph [0017] * | | |
| | * paragraph [0025] * | | |
| | * paragraph [0030] * | | |
| | * paragraph [0047] * | | |
| | * paragraph [0043] * | | |
| | * paragraph [0050] - paragraph [0051] * | | |
| | * paragraph [0055] * | | |
| | * paragraph [0056] * | | |
| | * paragraph [0052] * | | |
| | ----- | | |
| | -/-- | | |

The present search report has been drawn up for all claims

| Place of search | Date of completion of the search | Examiner |
|---|---|---|
| The Hague | 19 February 2024 | Barunovic, Robert |

EPO FORM 1503 03.82 (P04C01)

Europäisches
Patentamt

European
Patent Office

Office européen
des brevets

**EUROPEAN SEARCH REPORT**

Application Number

EP 23 19 5460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2010 023359 A (TORAY INDUSTRIES) 4 February 2010 (2010-02-04) * abstract; figures 1,2,3,4,9 * * paragraph [0007] - paragraph [0009] * * paragraph [0016] * * paragraph [0020] * * paragraph [0023] * * paragraph [0033] * * paragraph [0030] * * paragraph [0039] * * paragraph [0048] - paragraph [0050] * * paragraph [0057] * | 1-7,9, 10,15,16 | |
| Y,D | US 2021/114342 A1 (FUJITA YUZO [JP] ET AL) 22 April 2021 (2021-04-22) * abstract; figures 8,9,10,11,12 * * paragraph [0057] * * paragraph [0068] - paragraph [0069] * | 14 | |
| A | US 9 587 913 B2 (GORE & ASS [US]) 7 March 2017 (2017-03-07) * abstract; figures 4,5,6 * | 1-16 | TECHNICAL FIELDS SEARCHED (IPC) |

The present search report has been drawn up for all claims

| Place of search | Date of completion of the search | Examiner |
|---|---|---|
| The Hague | 19 February 2024 | Barunovic, Robert |

**EP 4 520 512 A1**

## ANNEX TO THE EUROPEAN SEARCH REPORT
## ON EUROPEAN PATENT APPLICATION NO.

EP 23 19 5460

19-02-2024

| Patent document cited in search report | | Publication date | Patent family member(s) | | Publication date |
|---|---|---|---|---|---|
| EP 2974842 | B1 | 18-09-2019 | CN | 105073364 A | 18-11-2015 |
| | | | EP | 2974842 A1 | 20-01-2016 |
| | | | JP | 5696812 B2 | 08-04-2015 |
| | | | JP | WO2014142061 A1 | 16-02-2017 |
| | | | KR | 20150107893 A | 23-09-2015 |
| | | | KR | 20160066008 A | 09-06-2016 |
| | | | KR | 20170102390 A | 08-09-2017 |
| | | | US | 2016016382 A1 | 21-01-2016 |
| | | | WO | 2014142061 A1 | 18-09-2014 |
| JP 2008208343 | A | 11-09-2008 | NONE | | |
| JP 2010023359 | A | 04-02-2010 | NONE | | |
| US 2021114342 | A1 | 22-04-2021 | CA | 3001447 A1 | 04-05-2017 |
| | | | CN | 108350201 A | 31-07-2018 |
| | | | CN | 113442466 A | 28-09-2021 |
| | | | EP | 3369768 A1 | 05-09-2018 |
| | | | KR | 20180075505 A | 04-07-2018 |
| | | | TW | 201725104 A | 16-07-2017 |
| | | | TW | 202304682 A | 01-02-2023 |
| | | | US | 2018297320 A1 | 18-10-2018 |
| | | | US | 2021114342 A1 | 22-04-2021 |
| | | | WO | 2017073460 A1 | 04-05-2017 |
| US 9587913 | B2 | 07-03-2017 | CA | 2898251 A1 | 24-07-2014 |
| | | | CN | 105246680 A | 13-01-2016 |
| | | | EP | 2945796 A1 | 25-11-2015 |
| | | | JP | 6404831 B2 | 17-10-2018 |
| | | | JP | 2016511710 A | 21-04-2016 |
| | | | KR | 20150110630 A | 02-10-2015 |
| | | | RU | 2015134592 A | 27-02-2017 |
| | | | US | 2014205798 A1 | 24-07-2014 |
| | | | WO | 2014113644 A1 | 24-07-2014 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6838148 B
- US 20100233423 A
- US 20210114342 A
- US 20190077048 A
- EP 2127840 A
- JP 2008260793 B
- JP 2010018723 B
- EP 4129601 A
- WO 2021192464 A
- JP 2015051629 B
- WO 2022179956 A